# FASCICULE DE BREVET EUROPEEN

(11) **EP 2 306 624 B1**
(45) Date de publication et mention de la délivrance du brevet: **07.05.2014**
(21) Numéro de dépôt: 10306039.8
(22) Date de dépôt: 27.09.2010
(51) Int. Cl.: H02K 17/18, H02K 17/20

(54) **Rotor de moteur électrique optimisé pour les grandes puissances**
Rotor eines Elektromotors optimiert für grosse Kräfte
Rotor of electric motor optimised for great powers

(30) Priorité: 30.09.2009 FR 0956809
(43) Date de publication de la demande: 06.04.2011
(73) Titulaire: GE Energy Power Conversion Technology Limited, Rugby Warwickshire CV21 1BU (GB)
(72) Inventeur: Lateb, Ramdane, 54250, Champigneulles (FR); Verdot, Patrick, 54000, Nancy (FR)
(74) Mandataire: Serjeants LLP

(56) Documents cités:
- EP-A1- 0 608 675
- WO-A1-2007/000424
- DE-A1- 3 113 530
- DE-C- 908 277
- JP-A- 57 183 241
- JP-B- 48 012 681
- US-A1- 2005 156 476
- US-A1- 2006 273 683
- "Hochstab für elektricen Maschinen mit Stromverdrängungsläufer", NEUES AUS DER TECHNIK, vol. V592, no. 3/4, 1 avril 1960 (1960-04-01), pages 2-2, XP001460683,

## Description

La présente invention se rapporte à un rotor de moteur électrique de grande puissance destiné à fonctionner à des vitesses de rotation particulièrement élevées. En particulier, l'invention s'applique aux moteurs asynchrones aptes à fonctionner à des vitesses périphériques élevées typiquement à partir de 100 m.s⁻¹, moteurs notamment destinés aux applications gazières, pétrolières, qu'elles soient sur terre, en mer, ou encore sous-marine.

Les moteurs électriques de forte puissance apte à fonctionner à des vitesses de rotations élevées trouvent de nombreuses applications. La fabrication de moteurs répondant à des exigences grandissantes en matière de puissance et de vitesse impose de nouvelles contraintes, notamment mécaniques, au niveau du rotor desdits moteurs. Les documents de brevet EP 0 608 675 A1 et US 5,512,792 décrivent des exemples de réalisation particulièrement efficaces de rotor pour moteurs asynchrones électriques, fonctionnant à une puissance et à des vitesses élevées. Il est ainsi décrit un rotor dont les barres constituant la cage d'écureuil peuvent librement se dilater, permettant ainsi d'atténuer les effets dus aux balourds thermiques.

Néanmoins, afin d'accroître encore la puissance reçue par ce type de moteur, l'augmentation du diamètre des barres constituant la cage d'écureuil s'avère nécessaire pour éviter l'échauffement excessif de ces dernières. Or, sur la base des exemples décrits dans les brevets cités précédemment, l'augmentation des sections desdites barres se traduit par une réduction des distances entre ces mêmes barres. Cette solution s'avère donc peu satisfaisante puisque la réduction de l'espacement entre chaque barre introduit de nouvelles contraintes magnétiques et mécaniques, ce qui aboutit, in fine, à fragiliser le rotor.

DE 31 13 530 A1 et WO 20071000424 A1 décrivent d'autres exemples de réalisation de rotor pour moteurs asynchrones électriques, conformes au préambule de la revendication 1.

L'invention a pour but de proposer un rotor apte à être intégré dans un moteur électrique aux caractéristiques améliorées en termes de puissance supportée et de vitesse périphériques de rotation, notamment par sa capacité à véhiculer une plus grande puissance électrique au travers de la cage d'écureuil dudit rotor.

La présente invention a notamment pour objet un rotor selon la revendication 1.

Suivant des modes particuliers de réalisation, le rotor comporte l'une ou plusieurs des caractéristiques suivantes :
- le rotor comprend en outre des moyens de fixation des barres secondaires par rapport à la masse magnétique disposés de sorte à permettre à chaque barre secondaire de se dilater symétriquement de part et d'autre desdits moyens de fixation ;
- le rotor comprend en outre des moyens de fixation des barres principales par rapport à la masse magnétique, partageant un même orifice avec les moyens de fixation de la barre secondaire ;
- la section de chaque barre secondaire comporte au moins une partie apte à épouser un contour de la partie de la section de chaque barre principale correspondante susceptible d'entrer en contact avec ladite barre secondaire lorsque le rotor est en rotation ;
- la section de la barre principale correspond à une forme de disque tronqué aplati et la section de la barre secondaire est sensiblement trapézoïdale, la partie aplatie du disque tronqué de la section de la barre principale étant disposée de sorte à entrer en contact avec la base du trapèze de la section de la barre secondaire lorsque le rotor est en rotation ;
- la section de la barre principale et la section de la barre secondaire correspondent à une forme de disque tronqué aplati, la partie aplatie du disque tronqué de la section de la barre principale étant disposée de sorte à entrer en contact avec la partie aplatie du disque tronqué de la barre secondaire lorsque le rotor est en rotation ;
- la section de la barre principale correspond sensiblement à un disque, et la section de la barre secondaire correspond à une forme de disque tronqué auquel a été soustrait une partie d'un disque équivalent à celui de la section de la barre principale, la partie du disque de la section de la barre principale étant disposée de sorte à entrer en contact avec la partie tronquée du disque de la barre secondaire lorsque le rotor est en rotation ;
- les extrémités des barres principales sont librement disposées dans des orifices pratiqués à la périphérie des couronnes de court-circuit ; et
- chaque orifice présente des dimensions intérieures supérieures à celles correspondantes aux dimensions de la forme extérieure de l'extrémité de la barre principale qu'il accueille, de sorte à laisser subsister un jeu de tolérance permettant la libre dilatation de l'extrémité de ladite barre principale dans l'orifice.

L'invention a également pour objet un moteur apte à entraîner le rotor tel que défini ci-dessus à une vitesse périphérique supérieure ou égale à 100 m.s⁻¹.

Le présente invention a encore pour avantage qu'elle permet d'améliorer significativement la puissance supportée par des moteurs tels que ceux décrit dans les documents de brevet EP 0 608 675 et US 5,512,792 sans engendrer de changement profond de la structure des rotors existants. En outre, l'invention n'induit aucune dilatation différentielle risquant de générer des balourds thermiques préjudiciables au fonctionnement du moteur.

D'autres caractéristiques et avantages de la présente invention apparaîtront mieux à la lecture de la description qui suit d'un exemple de réalisation donné à titre illustratif et nullement limitatif annexé des figures qui représentent :
- la figure 1, une coupe longitudinale d'une partie d'un rotor selon l'invention ;
- la figure 2, une coupe transversale de la masse magnétique ;
- la figure 3, le détail d'un moyen de fixation des barres principales et secondaires ;
- la figure 4, une coupe transversale d'une encoche comportant une barre principale et une barre secondaire ;
- les figures 5, 7, 9, 11 des exemples de forme des sections de barres principales et de barres secondaires ;
- les figures 6, 8, 10 des exemples de forme d'encoche en fonction de la forme des sections de barres principales et de barres secondaires.

L'invention, en particulier le rotor selon l'invention, trouve pour application les moteurs aptes à fonctionner à des vitesses périphériques élevées typiquement à partir de 100 m.s⁻¹. Le rotor selon l'invention est en particulier adapté à être utilisé au sein de moteurs électriques asynchrones, notamment destinés aux applications gazières, pétrolières, qu'elles soient sur terre, en mer, ou encore sous-marines.

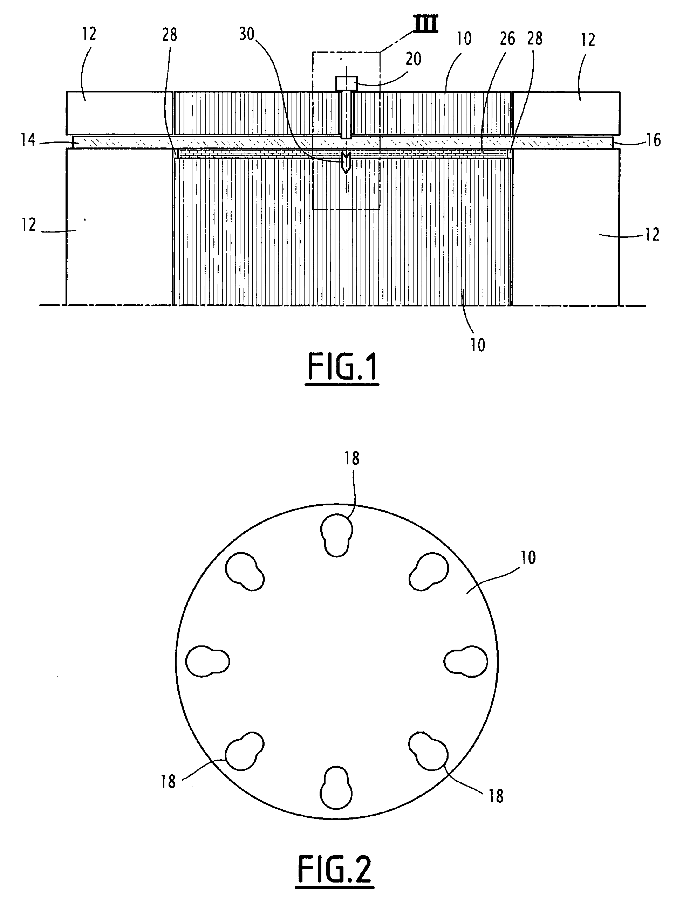

La figure 1 montre une coupe longitudinale d'une partie d'un rotor selon un mode de réalisation selon l'invention. Le rotor ainsi représenté est adapté à coopérer avec un stator et des arbres (non représentés sur la figure 1). Le rotor comporte une masse magnétique 10 enserrée de part et d'autre des couronnes de court-circuit 12. La masse magnétique 10 peut être un assemblage de tôles magnétiques dont la réalisation, en particulier le dispositif de serrage desdites tôles, est décrite notamment dans le document de brevet US 5,512,792.

Le rotor comporte des conducteurs électriques aptes à conduire au travers de la masse magnétique 10 des courants électriques appliqués au rotor par les couronnes de court-circuit 12. Les conducteurs électriques comportent en outre des barres principales 14 dont les extrémités sont librement disposées dans des orifices 16 pratiqués à la périphérie des couronnes de court-circuit 12. Chaque orifice 16 a sensiblement la même forme que l'extrémité de la barre principale 14 qu'il accueille. De même chaque orifice 16 présente des dimensions intérieures supérieures à celles correspondantes aux dimensions de la forme extérieure de l'extrémité de la barre principale 14 qu'il accueille. Cet espacement laisse ainsi subsister un jeu de tolérance qui permet notamment la libre dilatation de l'extrémité de la barre principale 14 dans l'orifice 16. Les orifices 16 peuvent être réalisés par alésage.

Chaque barre principale 14 traverse la masse magnétique 10 par l'intermédiaire d'une encoche 18, comme illustré par la figure 2 représentant une coupe transversale de la masse magnétique 10. On notera que l'encoche 18 est de préférence fermée radialement, c'est-à-dire qu'elle ne présente pas d'ouverture radiale, de sorte que le contact entre la barre principale 14 et la masse magnétique 10 est optimal.

La section des barres principales 14 comporte de préférence au moins une partie circulaire ou quasi-circulaire. Chaque barre principale 14 est alors disposée de sorte que sa partie circulaire soit orientée vers l'extérieur par rapport à l'axe de rotation du rotor. Ainsi lorsque le rotor est en rotation, c'est la partie circulaire de la barre principale 14 qui accentue son appui sur l'encoche 18 sous l'effet de la force centrifuge. Les barres principales 14 sont réalisés en cuivre ou alliage de cuivre. Les couronnes de court-circuit 12 ainsi que les barres principales 14 forment la cage d'écureuil du rotor. Les barres principales 14 sont en outre fixées à la masse magnétique 10 en un seul point à l'aide de tout moyen de fixation 20 adéquat, comme par exemple une vis, une goupille ou par n'importe quel dispositif, procédé et accessoire de fixation.

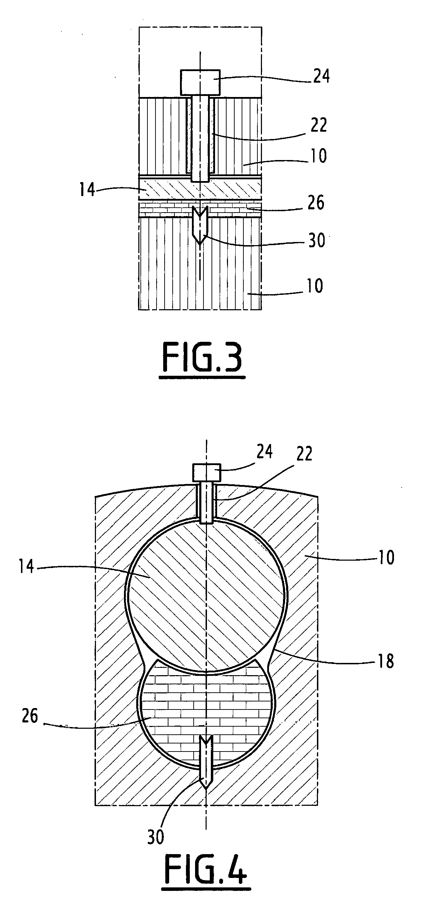

La figure 3 illustre un exemple de réalisation du moyen de fixation 20. Un trou de réception 22 dans la masse magnétique 1 débouchant dans l'encoche 18 comportant la barre principale 14 est réalisé sensiblement au milieu de la masse magnétique 1, perpendiculairement à l'axe de rotation du rotor. Le trou de réception 22 comporte un filetage dans lequel une vis 24 est introduite. La vis 24 permet d'appliquer une pression sur la barre principale 14.

Les conducteurs électriques du rotor comporte en outre des barres secondaires 26 introduites dans les encoches 18 de la masse magnétique 10 conjointement avec les barres principales 14. Chaque barre secondaire 26 a une longueur légèrement inférieure à la longueur de la masse magnétique 10. Dans ce cas, un jeu de tolérance 28 est obtenu entre chaque barre secondaire 26 et les couronnes de court-circuit 12, assurant la libre dilatation des barres secondaires 26 dans les encoches 18 de la masse magnétique 10. Les conducteurs électriques du rotor ont donc sur une partie de leur longueur une section oblongue de grand axe s'étendant radialement par rapport à l'axe longitudinal de la masse magnétique 10. Les barres secondaires 26 sont réalisées dans le même matériau que les barres principales, en particulier en cuivre. Elles peuvent être fixées par rapport à la masse magnétique 10 en un seul point à l'aide de moyens de fixation 30 adéquat, comme par exemple une vis, une goupille ou encore par n'importe quel dispositif, procédé et accessoire de fixation. Les figures 3 et 4 illustrent un tel exemple de réalisation. Les moyens de fixation 30 sont composés d'un pion de fixation disposé sensiblement au centre de la masse magnétique 10 au niveau de l'encoche 18, et enchâssé dans la barre secondaire 26. Les moyens de fixations 30 partage alors le trou de réception 22 des moyens de fixation 20. Les moyens de fixations 30 et 20 assurent un blocage axial des barres principales 14 et des barres secondaires 26 par rapport au rotor. Les moyens de fixations 30 et 20 n'assurent pas nécessairement un blocage radial des barres principales 14 et des barres secondaires 26 par rapport au rotor. Les moyens de fixation 30 permettent à la barre secondaire 26 de se dilater, notamment sous l'effet de la température, symétriquement de part et d'autre des moyens de fixation 30.

La forme et la disposition de chaque encoche 18 de la masse magnétique 10 sont choisies de sorte à permettre le passage simultané d'une des barres principales 14 et d'une des barres secondaires 26 et à assurer un contact entre ladite barre principale 14 et ladite barre secondaire 26 suffisant pour permettre le passage d'un courant électrique lorsque le rotor est en rotation.

La figure 4 montre une coupe transversale d'une encoche 18 dans laquelle est introduit une des barres principales 14 et une des barres secondaires 26. L'encoche 18 possède une forme sensiblement circulaire ou quasi-circulaire dans sa partie susceptible d'entrer en contact avec la barre principale 14 (partie haute de l'encoche 18 sur la figure 4) sous l'effet de la force centrifuge lorsque le rotor est en rotation. L'encoche 18 possède une forme sensiblement équivalente à la forme de la partie de la barre secondaire 26 susceptible d'entrer en contact avec l'encoche 18 (partie basse de l'encoche 18 sur la figure 4).

La barre secondaire 26 peut prendre différentes formes. Cependant la section de la barre secondaire 26 comporte au moins une partie apte à épouser le contour 32 de la partie de la section de la barre principale 14 correspondante susceptible d'entrer en contact avec la barre secondaire 26 sous l'effet de la force centrifuge lorsque le rotor est en rotation.

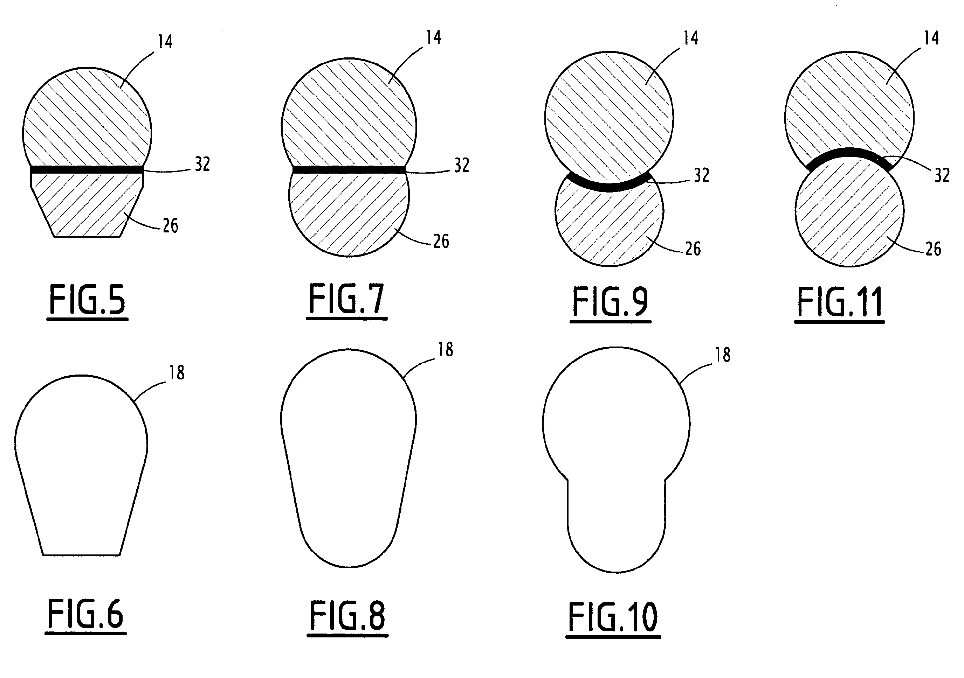

La figure 5 montre un premier exemple de forme des sections de barre principale 14 et de barre secondaire 26. La section de la barre principale 14 correspond à une forme de disque tronqué aplati dans sa partie inférieure. La section de la barre secondaire 26 est quant à elle sensiblement trapézoïdale. Dans cette configuration, le contour 32 a sensiblement la forme d'un segment de droite, la partie aplati du disque tronqué de la section de la barre principale 14 étant disposée de sorte à entrer en contact avec la base du trapèze de la section de la barre secondaire 26 sous l'effet de la force centrifuge lorsque le rotor est en rotation. La figure 6 montre un exemple de la forme de l'encoche 18 adéquat pour accueillir la barre principale 14 et la barre secondaire 26 illustré par la figure 5.

La figure 7 montre un deuxième exemple de forme des sections de barre principale 14 et de barre secondaire 26. La section de la barre principale 14 tout comme la section de la barre secondaire correspond à une forme de disque tronqué aplati, dans sa partie inférieure pour la barre principale 14, dans sa partie supérieure pour la barre secondaire 26. Dans cette configuration, le contour 32 a sensiblement la forme d'un segment de droite, la partie aplati du disque tronqué de la section de la barre principale 14 étant disposée de sorte à entrer en contact avec la partie aplati du disque tronqué de la barre secondaire 26 sous l'effet de la force centrifuge lorsque le rotor est en rotation. La figure 7 montre un exemple de la forme de l'encoche 18 adéquat pour accueillir la barre principale 14 et la barre secondaire 26 illustré par la figure 8.

La figure 9 montre un troisième exemple de forme des sections de barre principale 14 et de barre secondaire 26. La section de la barre principale 14 correspond sensiblement à un disque tandis que la section de la barre secondaire correspond à une forme de disque tronqué auquel a été soustrait une partie d'un disque équivalent à celui de la section de la barre principale 14. Dans cette configuration, le contour 32 a sensiblement la forme d'un arc de cercle, la partie basse du disque de la section de la barre principale 14 étant disposée de sorte à entrer en contact avec la partie tronqué du disque de la barre secondaire 26 sous l'effet de la force centrifuge lorsque le rotor est en rotation. La figure 10 montre un exemple de la forme de l'encoche 18 adéquat pour accueillir la barre principale 14 et la barre secondaire 26 illustré par la figure 9.

La figure 11 représente des sections de barres adaptées à l'encoche de la figure 10. A l'inverse de l'agencement de la figure 9, la barre secondaire 16 a une section circulaire alors que la barre principale 14 est globalement de section circulaire avec une portion tronquée en creux propre à accueillir partiellement la barre secondaire 26. La portion tronquée a une forme complémentaire à celle de la barre secondaire.

Les dimensions de l'encoche 18 ainsi que celles de la barre principale 14 et de la barre secondaire 26 sont ajustées de sorte que le jeu de tolérance entre la barre principale 14 et la barre secondaire 26 soit suffisant pour assurer un contact permettant le passage d'un courant électrique lorsque le rotor est en rotation. Le jeu de tolérance entre la barre principale 14 et la barre secondaire 26 est notamment dimensionné en prenant en compte le coefficient de dilatation des matériaux utilisés pour la fabrication de la barre principale 14 et de la barre secondaire 26, ainsi qu'en tenant compte des contraintes d'assemblage du rotor. Quoiqu'il en soit, ce contact est en outre d'autant plus prononcé que la vitesse de rotation du rotor augmente, en présence des forces centrifuges et sous l'effet de la dilatation thermique.

Alternativement, les conducteurs magnétiques du rotor peuvent être formé d'une seule barre métallique de section oblongue sur une partie de la longueur traversant la masse magnétique 10.

L'invention est particulièrement adaptée aux moteurs de forte puissance évoluant à de grandes vitesses de rotation, typiquement à des vitesses périphériques à partir de 100 m.s⁻¹. Ce type de moteur est généralement contrôlé par des variateurs de fréquence. Le démarrage du moteur ne nécessite qu'un faible courant électrique en raison des applications auxquelles sont destinées ces types de moteurs, à savoir leur utilisation dans des compresseurs ou des pompes. Dans ce cas, une légère pression de la barre principale 14 dans l'orifice 16 suffit à permettre le passage d'un faible courant. Par ailleurs, pour les mêmes raisons, la section de la barre principale 14 assure à elle seule le passage du faible courant électrique au démarrage et par conséquent la contribution de la barre secondaire 26 est quasi inexistante en raison du faible jeu séparant les barres principales 14 et les barres secondaires 26. Lorsque le moteur accroît sa vitesse, la force centrifuge devenant de plus en plus importante, cette dernière déforme:
- la barre principale 14, qui va alors exercer une pression sur la face interne de l'orifice 16 dans les couronnes de court-circuit 8 et ainsi engendrer un contact plus important ;
- la barre secondaire 26, qui va s'appuyer sur la barre principale 14 en épousant sa forme assurant ainsi un contact plus important et augmentant alors la section de passage du courant.

Simultanément, lorsque le moteur accroît sa puissance, les phénomènes d'échauffements, devenant de plus en plus important au sein du rotor, engendrent le dilatement :
- de la barre principale 14, qui va alors exercer une pression sur la face interne de l'orifice 16 dans les couronnes de court-circuit 12 et ainsi engendrer un contact plus important ;
- de la barre secondaire 26 qui va s'appuyer sur la barre principale 14 en épousant sa forme assurant ainsi un contact plus important et augmentant alors la section de passage du courant.

## Revendications

1. Rotor pour moteur électrique haute vitesse de forte puissance comportant, suivant l'axe du rotor, une masse magnétique (10), formée par un assemblage de tôles magnétiques, enserrée de part et d'autre par des couronnes de court-circuit (12), et traversée au niveau d'une pluralité d'encoches (18) par des conducteurs électriques (14, 26) reliant les couronnes de court-circuit (12) pour former une cage d'écureuil, dans lequel:
- chaque conducteur électrique (14, 26) est formé par l'assemblage d'une barre principale (14) et d'une barre secondaire (26), traversant la masse magnétique (10) par l'intermédiaire de l'une des encoches (18),
- chacun de ces assemblages formant un conducteur électrique (14, 26) présente, sur une partie au moins de sa longueur, une section oblongue de grand axe s'étendant sensiblement radialement par rapport à l'axe longitudinal du rotor,
**caractérisé en ce que**:
- la forme de chaque encoche (18) est complémentaire au dit assemblage de la barre principale (14) et de la barre secondaire (26) et un jeu de tolérance existe entre la barre principale (14) et la barre secondaire (26) lorsque le moteur est à l'arrêt,
- la forme et la disposition de chaque encoche (18) et de la barre principale (14) et de la barre secondaire (26) sont définies de sorte que le dit jeu de tolérance soit suffisant pour permettre à la barre secondaire (26) traversant cette encoche (18) de venir s'appuyer sur la barre principale (14) traversant cette même encoche (18), lorsque le rotor est en rotation, et assurer ainsi un contact entre la dite barre principale (14) et la dite barre secondaire (26) suffisant pour permettre le passage d'un courant électrique,
- les barres secondaires (26) sont réalisées dans le même matériau que les barres principales (14), et
- chaque barre secondaire (26) a une longueur inférieure à la longueur de la masse magnétique (10) pour permettre l'obtention d'un jeu de tolérance (28) entre chaque barre secondaire (26) et les couronnes de court-circuit (12), assurant la libre dilatation de la barre secondaire (26) dans son encoche (18).

2. Rotor selon la revendication 1, comprenant en outre des moyens de fixation (30) des barres secondaires (26) par rapport à la masse magnétique (10) disposés de sorte à permettre à chaque barre secondaire (26) de se dilater symétriquement de part et d'autre desdits moyens de fixation (30).

3. Rotor selon la revendication 2, comprenant en outre des moyens de fixation (20) des barres principales (14) par rapport à la masse magnétique (10), partageant un même orifice (22) avec les moyens de fixations (30) de la barre secondaire (26).

4. Rotor selon l'une quelconque des revendications 1 à 3, dont la section de chaque barre secondaire (26) comporte au moins une partie apte à épouser un contour (32) de la partie de la section de chaque barre principale (14) correspondante susceptible d'entrer en contact avec ladite barre secondaire (26) lorsque le rotor est en rotation.

5. Rotor selon la revendication 4, dont la section de la barre principale (14) correspond à une forme de disque tronqué aplati et dont la section de la barre secondaire (26) est sensiblement trapézoïdale, la partie aplatie du disque tronqué de la section de la barre principale (14) étant disposée de sorte à entrer en contact avec la base du trapèze de la section de la barre secondaire (26) lorsque le rotor est en rotation.

6. Rotor selon la revendication 4, dont la section de la barre principale (14) et la section de la barre secondaire (26) correspondent à une forme de disque tronqué aplati, la partie aplatie du disque tronqué de la section de la barre principale (14) étant disposée de sorte à entrer en contact avec la partie aplatie du disque tronqué de la barre secondaire (26) lorsque le rotor est en rotation.

7. Rotor selon la revendication 4, dont la section de la barre principale (14) correspond sensiblement à un disque, et dont la section de la barre secondaire (26) correspond à une forme de disque tronqué auquel a été soustrait une partie d'un disque équivalent à celui de la section de la barre principale (14), la partie du disque de la section de la barre principale (14) étant disposée de sorte à entrer en contact avec la partie tronquée du disque de la barre secondaire (26) lorsque le rotor est en rotation.

8. Rotor selon l'une quelconque des revendications 1 à 6, dont les extrémités des barres principales (14) sont librement disposées dans des orifices (16) pratiqués à la périphérie des couronnes de court-circuit (12).

9. Rotor selon la revendication 8, dont chaque orifice (16) présente des dimensions intérieures supérieures à celles correspondantes aux dimensions de la forme extérieure de l'extrémité de la barre principale (14) qu'il accueille, de sorte à laisser subsister un jeu de tolérance permettant la libre dilatation de l'extrémité de ladite barre principale (14) dans l'orifice (16).

10. Moteur apte à entraîner le rotor selon l'une quelconques des revendications 1 à 9 à une vitesse périphérique supérieure ou égale à 100 m.s⁻¹.

11. Utilisation du rotor selon l'une quelconques des revendications 1 à 9 dans un moteur apte à entraîner ledit rotor à une vitesse périphérique supérieure ou égale à 100 m.s⁻¹.

## Patentansprüche

1. Rotor für einen schnelldrehenden Elektromotor mit hoher Leistung, der entlang der Rotorachse eine magnetische Masse (10) aufweist, die durch eine Anordnung von magnetischen Blechen gebildet ist, die beiderseits von Kurzschlussringen (12) eingespannt sind, und die auf Höhe einer Mehrzahl von Nuten (18) durch elektrische Leiter (14, 26) durchsetzt sind, die die Kurzschlussringe (12) verbinden, um einen Kurzschlussläufer zu bilden, bei dem:
- jeder elektrische Leiter (14, 26) durch eine Anordnung einer Hauptstange (14) und einer Sekundärstange (26) gebildet ist, die die magnetische Masse (10) mittels einer der Nuten (18) durchsetzen,
- jede dieser einen elektrischen Leiter (14 ,26) bildenden Anordnungen in einem Bereich zumindest in seiner Länge einen länglichen Abschnitt mit großer Achse aufweist, der sich im Wesentlichen radial mit Bezug zur Längsachse des Rotors erstreckt,
**dadurch gekennzeichnet, dass**:
- die Form jeder Nut (18) komplementär zur angegebenen Anordnung der Hauptstange (14) und der Sekundärstange (26) ist und ein Toleranzspiel zwischen der Hauptstange (14) und der Sekundärstange (26) besteht, wenn der Motor angehalten ist,
- die Form und die Anordnung jeder Nut (18) und der Hauptstange (14) und der Sekundärstange (26) derart definiert sind, dass das angegebenen Toleranzspiel ausreichend ist, um es der Sekundärstange (26), die diese Nut (18) durchsetzt, zu ermöglichen, in Anlage mit der Hauptstange (14), die dieselbe Nut (18) durchsetzt, zu gelangen, wenn der Rotor rotiert und dadurch einen Kontakt zwischen dieser Hauptstange (14) und dieser Sekundärstange (26) sicherzustellen, der ausreicht, um das Durchfließen eines elektrischen Stromes zu ermöglich,
- die zweiten Stangen (26) aus demselben Material hergestellt sind wie die Hauptstangen (14) und
- jede Sekundärstange (26) eine geringe Länge als die magnetische Masse (10) hat, um das Erreichen eines Toleranzspiels (28) zwischen jeder Sekundärstange (26) und den Kurzschlussringen (12) zu ermöglichen, das die freie Ausdehnung der Sekundärstange (26) in seiner Nut (18) sicherstellt.

2. Rotor nach Anspruch 1, außerdem aufweisend Befestigungsmittel (30) der Sekundärstangen (26) in Bezug auf die magnetische Masse (10), die so angeordnet sind, um jeder Sekundärstange (26) zu ermöglichen, sich symmetrisch beidseitig gegenüber diesen Befestigungsmitteln (30) auszudehnen.

3. Rotor nach Anspruch 2, außerdem aufweisend Befestigungsmittel (20) der Hauptstangen (14) in Bezug auf die magnetische Masse (10), die sich dieselbe Öffnung (22) mit den Befestigungsmitteln (30) der Sekundärstangen (26) teilen.

4. Rotor nach einem der Ansprüche 1 bis 3, wobei der Abschnitt jeder Sekundärstange (26) zumindest einen Bereich aufweist, der dazu eingerichtet ist, sich an die Kontur (32) des Bereichs des Abschnitts jeder zugeordneten Hauptstange (14) anzuschmiegen, der dafür vorgesehen ist, in Kontakt mit der betreffenden Sekundärstange (26) zu gelangen, wenn sich der Rotor dreht.

5. Rotor nach Anspruch 4, wobei der Abschnitt der Hauptstange (14) einer Form einer abgeschnittenen abgeflachten Scheibe entspricht und bei dem der Abschnitt der Sekundärstange (26) im Wesentlichen trapezförmig ist, wobei der abgeflachte Teil der abgeschnittenen Scheibe des Abschnitts der Hauptstange (14) derart angeordnet ist, dass er mit der Basis des Trapezes des Abschnitts der Sekundärstange (26) in Kontakt gelangt, wenn sich der Rotor dreht.

6. Rotor nach Anspruch 4, bei dem der Abschnitt der Hauptstange (14) und der Abschnitt der Sekundärstange (26) einer Form einer abgeflachten abgeschnittenen Scheibe entsprechen, wobei der abgeflachte Teil der abgeschnittenen Scheibe des Abschnitts der Hauptstange (14) derart angeordnet ist, dass er mit dem abgeflachten Teil der abgeschnittenen Scheibe der Sekundärstange (26) in Kontakt gelangt, wenn sich der Rotor dreht.

7. Rotor nach Anspruch 4, bei dem der Abschnitt der Hauptstange (14) im Wesentlichen einer Scheibe entspricht und bei dem der Abschnitt der Sekundärstange (26) einer Form einer abgeschnittenen Scheibe entspricht, von der ein Teil einer Scheibe weggenommen ist, der äquivalent ist zu der des Abschnitts der Hauptstange (14), wobei der Bereich der Scheibe des Abschnitts der Hauptstange (14) derart angeordnet ist, dass er mit dem abgeschnittenen Teil der Scheibe der Sekundärstange (26) in Kontakt gelangt, wenn der Rotor sich dreht.

8. Rotor nach einem der Ansprüche 1 bis 6, bei dem die Enden der Hauptstangen (14) frei in den Öffnungen (16) angeordnet sind, die in den Umfangsbereich der Kurzschlussringe (12) eingebracht sind.

9. Rotor nach Anspruch 8, bei dem jede Öffnung (16) Innenabmessungen aufweist, die größer sind als die den der äußeren Form des Endes der aufgenommenen Hauptstange entsprechenden Dimensionen, derart, dass ein Toleranzspiel bestehen bleibt, das die freie Ausdehnung des Endes der genannten Hauptstange (14) in der Öffnung (16) ermöglicht.

10. Motor, der dazu eingerichtet ist, einen Rotor nach einem der Ansprüche 1 bis 9 mit einer Umfangsgeschwindigkeit größer oder gleich 100 Meter pro Sekunde anzutreiben.

11. Verwendung eines Rotors nach einem der Ansprüche 1 bis 9 in einen Motor, der dazu eingerichtet ist, den Rotor mit einer Umfangsgeschwindigkeit größer oder gleich 100 Meter pro Sekunde anzutreiben.

## Claims

1. Rotor for a high speed high power electric motor comprising, along the axis of the rotor, a magnetic mass (10) made of an assembly of magnetic sheets, clamped on either side by short-circuit rings (12), and through which electric conductors (14, 26) are passing via a plurality of notches (18), that connect the short-circuit rings (12) to form a squirrel cage, in which:
- each electric conductor (14, 26) is formed by the assembly of a main bar (14) and of a secondary bar (26), passing through the magnetic mass (10) via one of the notches (18),
- each of these assemblies that forms an electric conductor (14, 26) has, over at least part of its length, an oblong cross section with a major axis running substantially radially with respect to the longitudinal axis of the rotor,
**characterized in that**:
- the shape of each notch (18) is complementary to the said assembly of the main bar (14) and of the secondary bar (26), and a tolerance clearance is left between the main bar (14) and the secondary bar (26) when the motor is at a standstill,
- the shape and arrangement of each notch (18) and of the main bar (14) and of the secondary bar (26) are defined in such a way that the said tolerance clearance is large enough to allow the secondary bar (26) passing through this notch (18) to press against the main bar (14) passing through this same notch (18) when the rotor is turning, and thus provides contact between the said main bar (14) and the said secondary bar (26) that is sufficient to allow the passage of an electric current,
- the secondary bars (26) are made from the same material as the main bars (14), and
- each secondary bar (26) has a length shorter than the length of the magnetic mass (10) to allow a tolerance clearance (28) to be obtained between each secondary bar (26) and the short-circuit rings (12), leaving the secondary bar (26) free to expand in its notch (18).

2. Rotor according to Claim 1, further comprising fixing means (30) for fixing the secondary bars (26) with respect to the magnetic mass (10), these means being arranged in such a way as to allow each secondary bar (26) to expand symmetrically on each side of the said fixing means (30).

3. Rotor according to Claim 2, further comprising fixing means (20) for fixing the main bars (14) with respect to the magnetic mass (10), sharing a same orifice (22) with the fixing means (30) for fixing the secondary bar (26).

4. Rotor according to any one of Claims 1 to 3, in which the cross section of each secondary bar (26) comprises at least one portion able to follow a contour (32) of the part of the cross section of each corresponding main bar (14) that is liable to come into contact with the said secondary bar (26) when the rotor is turning.

5. Rotor according to Claim 4, in which the cross section of the main bar (14) corresponds to the shape of a flattened truncated disc and in which the cross section of the secondary bar (26) is substantially trapezoidal, the flattened part of the truncated disc of the cross section of the main bar (14) being arranged in such a way as to come into contact with the base of the trapezium of the cross section of the secondary bar (26) when the rotor is turning.

6. Rotor according to Claim 4, in which the cross section of the main bar (14) and the cross section of the secondary bar (26) correspond to the shape of a flattened truncated disc, the flattened part of the truncated disc of the cross section of the main bar (14) being arranged in such a way as to come into contact with the flattened part of the truncated disc of the secondary bar (26) when the rotor is turning.

7. Rotor according to Claim 4, in which the cross section of the main bar (14) corresponds substantially to a disc, and in which the cross section of the secondary bar (26) corresponds to the shape of a truncated disc from which has been removed a part of a disc that is equivalent to that of the cross section of the main bar (14), the part of the disc of the cross section of the main bar (14) being arranged in such a way as to come into contact with the truncated part of the disc of the secondary bar (26) when the rotor is turning.

8. Rotor according to any one of Claims 1 to 6, in which the ends of the main bars (14) are freely arranged in orifices (16) made at the periphery of the short-circuit rings (12).

9. Rotor according to Claim 8, in which each orifice (16) has internal dimensions greater than the dimensions corresponding to the dimensions of the exterior shape of the end of the main bar (14) that it receives, so as to leave a tolerance clearance allowing the end of the said main bar (14) to expand freely in the orifice (16).

10. Motor able to drive the rotor according to any one of Claims 1 to 9 at a peripheral speed greater than or equal to 100 m.s⁻¹.

11. Use of the rotor according to any one of Claims 1 to 9 in a motor able to drive the said rotor at a peripheral speed greater than or equal to 100 m.s⁻¹.
